# FASCICULE DE BREVET EUROPEEN

(11) **EP 3 645 847 B1**
(45) Date de publication et mention de la délivrance du brevet: **22.09.2021**
(21) Numéro de dépôt: 18737695.9
(22) Date de dépôt: 20.06.2018
(51) Int. Cl.: F02C 7/20, F01D 25/28

(54) **PROCÉDÉ D'ASSEMBLAGE D'UNE TURBOMACHINE**
VERFAHREN ZUR MONTAGE EINER TURBOMASCHINE
METHOD FOR ASSEMBLING A TURBOMACHINE

(30) Priorité: 27.06.2017 FR 1755886
(43) Date de publication de la demande: 06.05.2020
(73) Titulaire: Safran Aircraft Engines, 75015 Paris (FR)
(72) Inventeur: LE GALL, Rémy, 77550 Moissy-Cramayel (FR)
(74) Mandataire: Gevers & Orès
(86) Numéro de dépôt international: PCT/FR2018/051478
(87) Numéro de publication internationale: WO 2019/002725

(56) Documents cités:
- EP-A2- 1 752 409
- DE-A1-102015 214 667
- KR-A- 20130 078 698
- US-A1- 2013 219 733

## Description

### Domaine de l'invention:

La présente invention concerne le domaine des turbomachines et vise en particulier les moteurs à turbine à gaz multi-corps. Elle se rapporte aux opérations d'assemblage des moteurs et en particulier au montage du module de turbine basse pression sur un corps haute pression.

### Etat de la technique :

Un turboréacteur à double corps, avec une soufflante avant par exemple, comprend un corps haute pression HP et un corps basse pression BP. Le corps BP tourne à une première vitesse et comprend une turbine BP en aval du corps HP, qui entraîne la soufflante avant. Le corps HP tourne à une vitesse différente de celle de la turbine BP. Les arbres des deux corps sont concentriques et l'arbre du corps BP traverse par l'intérieur l'arbre du corps HP. L'arbre du corps BP est guidé en rotation par des paliers supportés par la structure fixe du moteur, situés respectivement en aval de la turbine et en amont du compresseur haute pression. L'arbre du corps HP est guidé en rotation par des paliers supportés par la structure fixe du moteur en amont et par l'arbre du corps BP en aval, au moyen d'un palier inter-arbres. Ce dernier palier est du type à rouleaux et situé, au moins selon un moteur connu, entre la turbine haute pression et la turbine basse pression. Un tel palier comprend une bague intérieure équipée de rouleaux maintenus par une cage sur l'arbre du corps BP et une bague extérieure, généralement montée avec serrage à froid dans l'arbre du corps HP. Le montage de ce palier, c'est-à-dire l'assemblage de la bague extérieure avec l'ensemble formé des rouleaux, de la cage et de la bague intérieure, est réalisé en même temps que l'accostage de la turbine basse pression durant lequel l'arbre préalablement monté avec la turbine basse pression est guidé dans le corps HP. Par le terme accostage, on désigne ici tout ou partie du déplacement en translation du module de turbine basse pression jusqu'à ce que la bride du carter externe de celui-ci vienne en contact avec la bride correspondante du module constituant le corps HP.

Il s'ensuit que le montage du palier inter-arbres est réalisé en aveugle. L'opérateur n'a aucune visibilité pour surveiller, en particulier, l'engagement des rouleaux dans le rotor du corps HP puis dans la bague extérieure. Cette opération comporte de forts risques de dégradation du palier si les conditions ne sont pas maîtrisées. Le risque le plus important pour le palier est un contact dur des rouleaux contre l'écrou de retenue de la bague extérieure et la bague elle-même.

Il est connu, par exemple par le document FR-A1-2 890 110, d'utiliser des techniques permettant d'effectuer un chauffage maîtrisé de la partie supportant la bague extérieure pour faciliter l'introduction des rouleaux sans contacts.

Cependant, même avec la dilatation de la bague extérieure, il faut assurer un positionnement précis de l'arbre du corps BP pour éviter les contacts. La pratique connue d'effectuer le centrage de l'arbre du corps BP au réglet manque de précision et entraîne des incidents de montage qui peuvent aboutir à des non qualités voire des dégradations de pièces qu'il faut alors changer en démontant au moins partiellement des modules de la turbomachine assemblée. Dans le document FR-A1-2 890 110, il est proposé d'utiliser des mesures lasers avec des instruments montés sur un support amovible venant se positionner par rapport au corps HP mais l'instrumentation est coûteuse et de mise en œuvre complexe.

Il existe donc un besoin de disposer d'une technique simple pour positionner l'arbre du module BP par rapport à la bague extérieure du module du corps HP avec une précision suffisante pour minimiser les risques de contact dur sur les éléments du palier inter-arbres. Plus généralement, il existe un besoin de disposer d'une technique simple pour l'assemblage d'une turbomachine comportant au moins deux modules assemblés par insertion d'un arbre d'un des modules dans un logement de l'autre des modules.

Un procédé d'assemblage d'une turbomachine est également divulgué dans le document US2013/219733.

### Exposé de l'invention :

A cet effet, l'invention concerne un procédé d'assemblage d'une turbomachine, au moyen d'un dispositif, la turbomachine comportant au moins deux modules assemblés par insertion d'un arbre d'un des modules dans un logement de l'autre des modules, le dispositif comportant :
- des moyens de support d'un premier des modules,
- des moyens de suspension d'un second des modules, et de déplacement de ce second module selon un axe de déplacement,
- un émetteur de faisceau laser destiné à être fixé audit premier module et configuré pour émettre un faisceau laser confondu avec un axe longitudinal de ce premier module, et
- une cible destinée à être fixée auxdits moyens de suspension et de déplacement, de manière à ce qu'elle puisse être déplacée le long dudit axe de déplacement, et qu'à au moins deux positions axiales distantes sur cet axe, une tâche dudit faisceau laser soit située au centre de ladite cible.

Le procédé selon l'invention comprend les étapes de :
a) positionnement dudit premier module sur lesdits moyens de support,
b) fixation de ladite cible auxdits moyens de suspension et de déplacement,
c) détermination d'une première position axiale de ladite cible, pour laquelle une tâche dudit faisceau laser est située au centre de ladite cible,
d) déplacement de ladite cible le long dudit axe de déplacement, et
e) détermination d'une seconde position axiale de ladite cible, pour laquelle une tâche dudit faisceau laser est située sur le centre de ladite cible, afin de valider le parallélisme entre ledit axe longitudinal dudit premier module et ledit axe de déplacement.

La fonction du faisceau laser est de simuler l'axe longitudinal du premier module. Cet axe doit être sensiblement parallèle à l'axe de déplacement pour autoriser l'assemblage des modules et en particulier éviter tout contact lors de l'accostage. Pour garantir ce parallélisme, il faut que dans au moins deux positions axiales distinctes de la cible le long de l'axe de déplacement, la tâche du faisceau laser soit centrée sur la cible. L'invention peut donc utiliser un unique émetteur laser et une unique cible.

Le dispositif peut comprendre une ou plusieurs des caractéristiques suivantes prises isolément les unes des autres ou en combinaison les unes avec les autres ;
- lesdits moyens de support sont configurés pour autoriser un réglage du positionnement dudit premier module dans au moins une direction sensiblement perpendiculaire audit axe longitudinal dudit premier module ;
- lesdits moyens de support sont configurés pour autoriser un réglage du positionnement dudit premier module dans deux directions sensiblement perpendiculaires entre elles et audit axe longitudinal dudit premier module ;
- lesdits moyens de suspension et de déplacement comprennent au moins un palan qui est accroché à une poutre et qui est apte à être déplacé le long de cette poutre définissant ledit axe de déplacement ;
- ledit premier module est le module comportant ledit logement ;
- ledit émetteur est logé dans ledit logement dudit premier module ;
- la distance entre lesdites première et seconde positions axiales est supérieure ou égale à 1 mètre, et par exemple comprise entre 2 et 3 mètres.

Le procédé d'assemblage d'une turbomachine, au moyen d'un dispositif tel que décrit ci-dessus, comprend les étapes de :
a) positionnement dudit premier module sur lesdits moyens de support,
b) fixation de ladite cible auxdits moyens de suspension et de déplacement,
c) détermination d'une première position axiale de ladite cible, pour laquelle une tâche dudit faisceau laser est située au centre de ladite cible,
d) déplacement de ladite cible le long dudit axe de déplacement, et
e) détermination d'une seconde position axiale de ladite cible, pour laquelle une tâche dudit faisceau laser est située sur le centre de ladite cible, afin de valider le parallélisme entre ledit axe longitudinal dudit premier module et ledit axe de déplacement.

L'étape a) peut être réalisée avant ou après l'étape b).

Le procédé peut comprendre des étapes suivantes de :
f) démontage de ladite cible desdits moyens de suspension et de déplacement,
g) fixation dudit second module auxdits moyens de suspension et de déplacement, et
h) insertion desdits premier et second modules l'un dans l'autre, par déplacement dudit second module le long dudit axe de déplacement.

De préférence, ladite première position axiale est située à proximité dudit premier module.

Avantageusement, le procédé comprend, entre les étapes d) et e), des sous-étapes de :
- vérification de la position de ladite tâche sur ladite cible, et
- réglage de la position dudit premier module de façon à ce que ladite tâche soit située au centre de ladite cible.

### Brève description des figures :

La présente invention sera mieux comprise et d'autres détails, caractéristiques et avantages de la présente invention apparaîtront plus clairement à la lecture de la description d'un exemple non limitatif qui suit, en référence aux dessins annexés sur lesquels :
   la figure 1 est une vue schématique de côté d'un dispositif pour l'assemblage d'une turbomachine utilisé dans le procédé selon l'invention ; deux modules de la turbomachine étant montés sur le dispositif ;
   la figure 2 est une autre vue schématique en perspective du dispositif de la figure 1, un des modules étant monté sur le dispositif et une cible étant montée également sur le dispositif à la place de l'autre module,
   la figure 3 est une autre vue schématique de côté du dispositif de la figure 1 équipé de la cible et de l'un des modules ici en coupe axiale ;
   la figure 4 est une vue schématique de face d'un module monté sur des moyens de support du dispositif de la figure 1 ; et
   la figure 5 est une vue schématique en perspective éclatée de moyens de réglage des moyens de support de la figure 4.

### Description de plusieurs modes de réalisations :

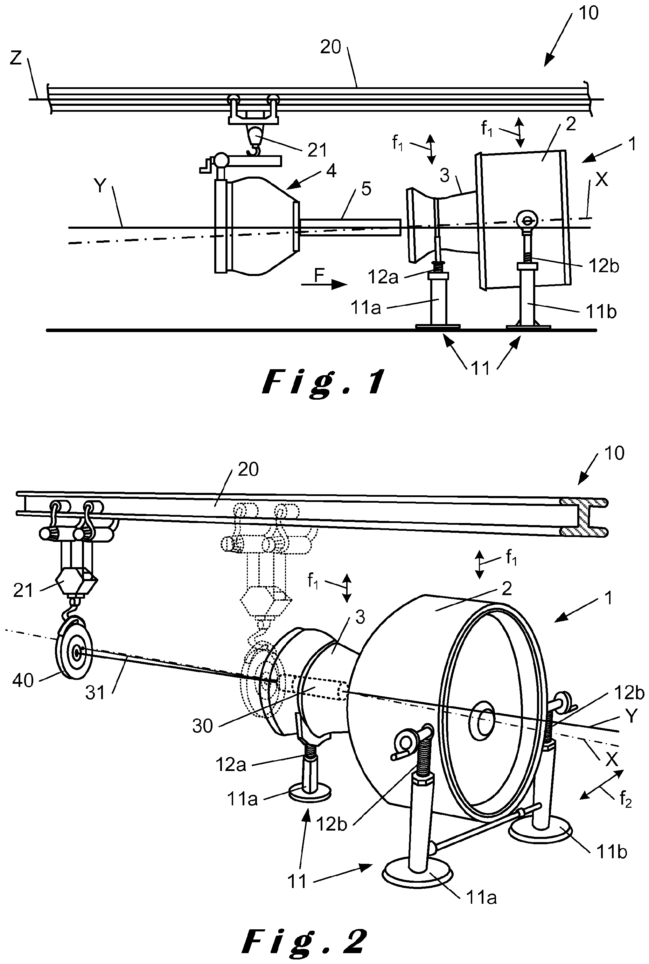

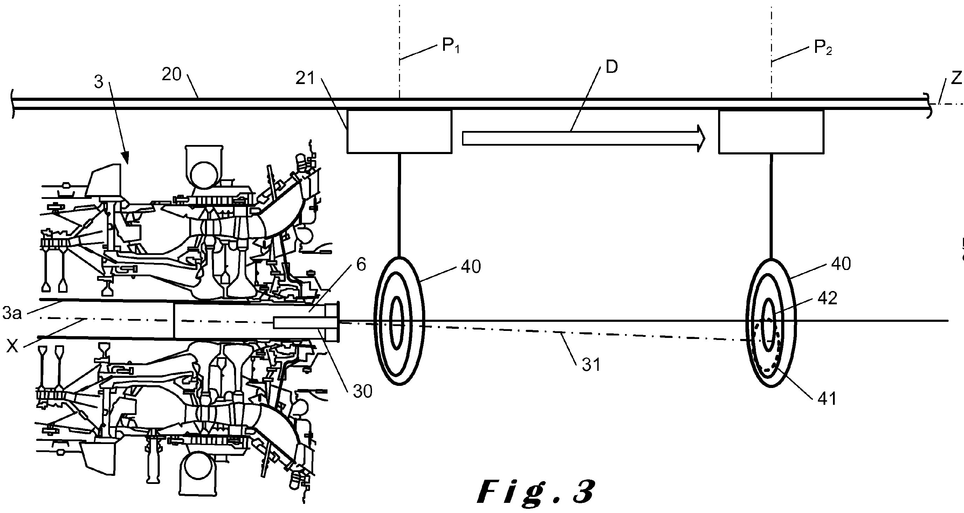

La figure 1 montre une turbomachine 1 en cours de montage, au début de l'opération d'accostage définie précédemment. Il s'agit ici d'un turboréacteur double flux et double corps. Il comprend une soufflante avant 2 et un module haute pression, dit premier module 3, constitué par le corps haute pression avec son arbre 3a, dit premier arbre, visible à la figure 3. Ces éléments sont déjà assemblés.

On est ici en train de monter le module de turbine basse pression, dit deuxième module 4, dont l'arbre 5, dit deuxième arbre, doit être engagé dans le corps haute pression en suivant la flèche F, parallèle à l'axe longitudinal X du premier module 3. Cet axe longitudinal X est sensiblement horizontal lors de l'assemblage.

Dans la suite de la description, on décrit donc le montage du deuxième module 4 dans le premier module 3. L'amont et l'aval sont notés suivant l'axe longitudinal X en fonction du sens principal de l'écoulement des gaz, donc en allant du corps haute pression vers la turbine basse pression.

A son extrémité aval, le premier module 3 comprend un logement 6 dans lequel est destiné à être inséré l'arbre 5 du second module 4. Cet arbre 5 s'étend le long de l'axe longitudinal Y du second module 4.

Les dessins montrent un exemple de réalisation d'un dispositif 10 pour l'assemblage de la turbomachine 1. Le dispositif 10 comprend des moyens 11 de support du premier module 3, et des moyens de suspension du second module 4, et de déplacement de ce second module 4 selon un axe de déplacement Z.

Les moyens de support 11 sont visibles aux figures 1, 2 et 4. Ils comprennent un premier support 11a de l'extrémité aval du premier module 3 et un second support 11b de l'extrémité amont du premier module 3. Les supports 11a, 11b s'apparentent à des piètements qui reposent au sol.

Le premier support 11a peut comprendre des moyens 12a de réglage du positionnement du premier module 3, de préférence dans une première direction verticale (double flèche f1). Le second support 11b peut comprendre des moyens 12b de réglage du positionnement du premier module 3, de préférence dans une première direction verticale (double flèche f1) et dans une seconde direction horizontale (double flèche f2).

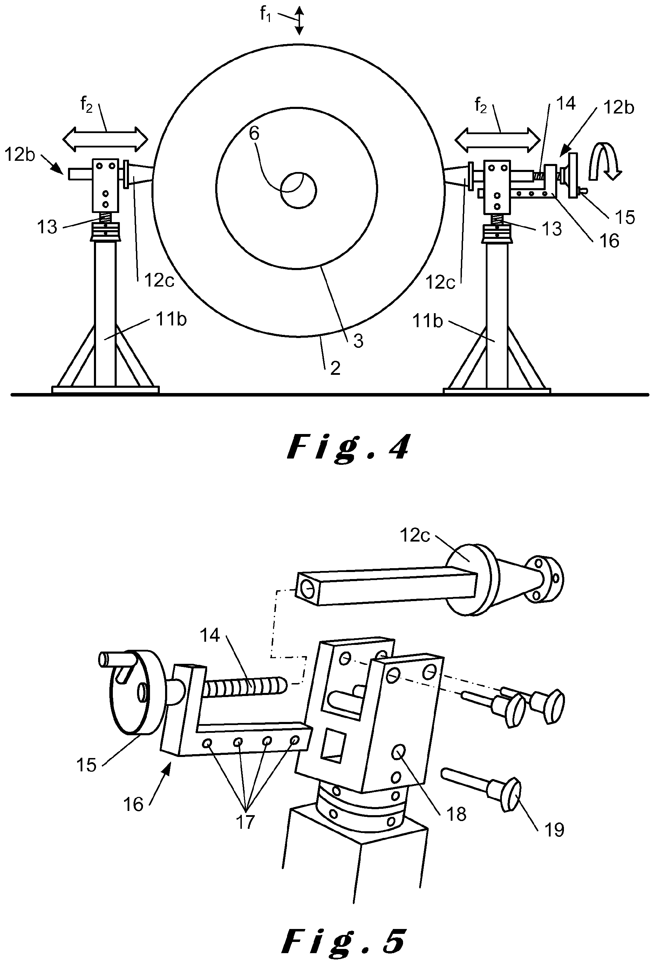

Les figures 4 et 5 montrent un exemple de réalisation des moyens de réglage 12b.

L'aptitude de réglage vertical des moyens 12b, ainsi que des moyens 12a, peut être obtenue grâce à des tiges filetées 13 orientées verticalement et qui peuvent être vissées ou dévissées pour ajuster la hauteur de moyens 12c de fixation au premier module 3. De plus, l'aptitude de réglage horizontal des moyens 12b peut être obtenue grâce à une autre tige filetée 14 orientée horizontalement et qui peut être vissée dans les moyens de fixation 12c ou dévissée de ces moyens de fixation, pour ajuster la position du premier module dans un plan horizontal. La tige filetée 14 a une extrémité engagée dans un orifice taraudé des moyens de fixation 12c et une extrémité opposée reliée à un volant manivelle 15. Ce volant manivelle 15 est montée sur une platine 16 qui est fixée de manière amovible à une tête d'une des tiges filetées 13. La platine 16 a une forme en L dont une branche porte le volant 15 mobile en rotation autour de son axe, et dont l'autre branche est horizontale et comprend une série horizontale de trous 17. La tête précitée de la tige filetée 13 comprend un trou 18 traversant de passage d'un pion 19 qui est destiné à être engagé à travers ce trou jusque dans un des trous 17 de la platine. L'un des trous 17 de la platine est aligné avec le trou 18 pour le montage du pion 19, en fonction de la position souhaitée des moyens de fixation en direction horizontale. Cette coopération permet un ajustement grossier de la position horizontale des moyens de fixation 12c et donc du premier module 3, et le vissage/dévissage de la tige filetée 14 dans les moyens de fixation 12c permet un ajustement plus précis de cette position.

Les moyens de suspension et de déplacement comprennent une poutre horizontale 20 à laquelle est fixé un palan 21. Le palan 21 est apte à se déplacer le long de la poutre 20 qui définit un axe Z de déplacement du palan 21.

Le second module 4 est destiné à être fixé au palan 21. Il est suspendu au palan 21 de façon à ce que son axe Y soit parallèle à l'axe Z. Pour réaliser l'assemblage des modules 3, 4 de la turbomachine 1, il faut que l'arbre du module 4 s'insère dans le logement 6 du module 3. Pour cela, il faut que les axes X et Y soient parallèles. Sachant que l'axe Y est parallèle à l'axe Z, il faut donc que les axes X et Z soient parallèles.

La présente invention permet d'atteindre de manière fiable et rapide cet objectif. Le dispositif d'assemblage comprend :
- un émetteur 30 de faisceau laser destiné à être fixé audit module 3 et configuré pour émettre un faisceau laser 31 confondu avec l'axe X, et
- une cible 40 destinée à être fixée aux moyens de suspension et de déplacement, de manière à ce qu'elle puisse être déplacée le long de l'axe Z.

L'émetteur 30 est par exemple inséré dans le logement 6 du module 3 et immobilisé dans ce logement 6 par des moyens appropriés. Il est monté dans le logement depuis l'aval du module 3 et est orienté de façon à ce que son faisceau laser 31 soit orienté vers l'aval.

La cible 40 est fixée au palan 21 en lieu et place du second module 4 et peut donc être déplacée le long de l'axe Z. Pour garantir le parallélisme entre les axes X et Z, il faut qu'au moins deux positions axiales distantes P1, P2 de la cible 40 existent, pour lesquelles une tâche 41 du faisceau laser soit située au centre 42 de la cible 40. En effet, dans le cas où deux positions axiales de la cible 40 sont identifiées comme répondant à ce critère, cela signifie que toutes les positions intermédiaires entre ces positions P1, P2 répondent à ce critère et que les axes X et Z sont parallèles.

En pratique, les positions P1, P2 sont à une distance D de 2 à 3 mètres l'une de l'autre. La première position P1 est une position axiale de la cible 40 au plus près du premier module 3. On positionne alors la cible juste en aval du module 3 puis on vérifie que la tâche du faisceau est centrée sur la cible 40. Si ce n'est pas le cas, on procède à un réglage de la position du premier module 3 jusqu'à ce que la tâche soit située au centre de la cible. Le réglage est réalisé avec les moyens 12a, 12b.

On déplace ensuite la cible 40 au moyen du palan 21 jusqu'à la position P2 et on vérifie la position de la tâche du faisceau sur la cible. Si elle n'est pas centrée, on procède à un réglage de la position du premier module 3 jusqu'à ce que la tâche soit située au centre de la cible. Le réglage est réalisé avec les moyens 12a, 12b. Dans un tel cas, on peut être amené à vérifier à nouveau que la tâche du faisceau est bien centrée sur la cible lorsque cette dernière est dans la position P1.

## Revendications

1. Procédé d'assemblage d'une turbomachine (1), au moyen d'un dispositif (10), la turbomachine comportant au moins deux modules (3, 4) assemblés par insertion d'un arbre (5) d'un des modules dans un logement (6) de l'autre des modules, le dispositif comportant :
- des moyens (11) de support d'un premier des modules,
- des moyens (20, 21) de suspension d'un second des modules, et de déplacement de ce second module selon un axe de déplacement (Z),
- un émetteur (30) de faisceau laser destiné à être fixé audit premier module et configuré pour émettre un faisceau laser (31) confondu avec un axe longitudinal (X) de ce premier module, et
- une cible (40) destinée à être fixée auxdits moyens de suspension et de déplacement, de manière à ce qu'elle puisse être déplacée le long dudit axe de déplacement, et qu'à au moins deux positions axiales distantes (P1, P2) sur cet axe, une tâche (41) dudit faisceau laser soit située au centre de ladite cible,
le procédé étant **caractérisé en ce qu'**il comprend les étapes de :
a) positionnement dudit premier module (3) sur lesdits moyens de support (11),
b) fixation de ladite cible (40) auxdits moyens de suspension et de déplacement,
c) détermination d'une première position axiale (P1) de ladite cible, pour laquelle une tâche (41) dudit faisceau laser (31) est située au centre de ladite cible,
d) déplacement de ladite cible le long dudit axe de déplacement (Z), et
e) détermination d'une seconde position axiale (P2) de ladite cible, pour laquelle une tâche dudit faisceau laser est située sur le centre de ladite cible, afin de valider le parallélisme entre ledit axe longitudinal (X) dudit premier module et ledit axe de déplacement.

2. Procédé selon la revendication 1, **caractérisé en ce qu'**il comprend des étapes suivantes de :
f) démontage de ladite cible (40) desdits moyens de suspension et de déplacement,
g) fixation dudit second module (4) auxdits moyens de suspension et de déplacement, et
h) insertion desdits premier et second modules (3, 4) l'un dans l'autre, par déplacement dudit second module le long dudit axe de déplacement.

3. Procédé selon la revendication 1 ou 2, **caractérisé en ce que** ladite première position axiale (P1) est située à proximité dudit premier module (3).

4. Procédé selon l'une des revendications 1 à 3, **caractérisé en ce qu'**il comprend, entre les étapes d) et e), des sous-étapes de :
- vérification de la position de ladite tâche (41) sur ladite cible (40), et
- réglage de la position dudit premier module (3) de façon à ce que ladite tâche soit située au centre de ladite cible.

5. Procédé selon l'une des revendications 1 à 4, **caractérisé en ce que** lesdits moyens de support (11) sont configurés pour autoriser un réglage du positionnement dudit premier module (3) dans au moins une direction (f1) sensiblement perpendiculaire audit axe longitudinal (X) dudit premier module.

6. Procédé selon l'une des revendications 1 à 5, **caractérisé en ce que** lesdits moyens de support (11) sont configurés pour autoriser un réglage du positionnement dudit premier module (3) dans deux directions (f1, f2) sensiblement perpendiculaires entre elles et audit axe longitudinal (X) dudit premier module.

7. Procédé selon l'une des revendications 1 à 6, **caractérisé en ce que** lesdits moyens de suspension et de déplacement comprennent au moins un palan (21) qui est accroché à une poutre (20) et qui est apte à être déplacé le long de cette poutre définissant ledit axe de déplacement (Z).

8. Procédé selon l'une des revendications 1 à 7, **caractérisé en ce que** ledit premier module (3) est le module comportant ledit logement (6).

9. Procédé selon la revendication 8, **caractérisé en ce que** ledit émetteur (30) est logé dans ledit logement (6) dudit premier module (3).

## Patentansprüche

1. Verfahren zum Zusammenbauen eine Turbomaschine (1) mittels einer Vorrichtung (10), wobei die Turbomaschine mindestens zwei Module (3, 4) umfasst, die durch Einfügen einer Welle (5) eines der Module in eine Aufnahme (6) des anderen der Module zusammengebaut werden, wobei die Vorrichtung umfasst:
- Mittel (11) zum Tragen eines ersten der Module,
- Mittel (20, 21) zum Aufhängen eines zweiten der Module und zum Verlagern dieses zweiten Moduls entlang einer Verlagerungsachse (Z),
- einen Laserstrahlsender (30), der dazu bestimmt ist, an dem ersten Modul befestigt und dazu konfiguriert zu sein, einen Laserstrahl (31), der mit einer Längsachse (X) dieses ersten Moduls zusammenfällt, abzugeben, und
- ein Ziel (40), das dazu bestimmt ist, an den Aufhängungs- und Verlagerungsmitteln derart befestigt zu sein, dass es entlang der Verlagerungsachse verlagert werden kann und dass auf mindestens zwei beabstandeten axialen Positionen (P1, P2) dieser Achse ein Fleck (41) des Laserstrahls in der Mitte des Ziels liegt,
Verfahren **dadurch gekennzeichnet, dass** es die Schritte umfasst des:
a) Positionierens des ersten Moduls (3) auf den Tragmitteln (11),
b) Befestigens des Ziels (40) an den Aufhängungs- und Verlagerungsmitteln,
c) Bestimmens einer ersten axialen Position (P1) des Ziels, für die ein Fleck (41) des Laserstrahls (31) in der Mitte des Ziels liegt,
d) Verlagerns des Ziels entlang der Verlagerungsachse (Z), und
e) Bestimmens einer zweiten axialen Position (P2) des Ziels, für die ein Fleck des Laserstrahls auf der Mitte des Ziels liegt, um die Parallelität zwischen der Längsachse (X) des ersten Moduls und der Verlagerungsachse zu validieren.

2. Verfahren nach Anspruch 1, **dadurch gekennzeichnet, dass** es die Schritte umfasst des:
f) Demontierens des Ziels (40) von den Aufhängungs- und Verlagerungsmitteln,
g) Befestigens des zweiten Moduls (4) an den Aufhängungs- und Verlagerungsmitteln, und
h) Einsetzens des ersten und des zweiten Moduls (3, 4) nacheinander durch Verlagern des zweiten Moduls entlang der Verlagerungsachse.

3. Verfahren nach Anspruch 1 oder 2, **dadurch gekennzeichnet, dass** die erste axiale Position (P1) in der Nähe des ersten Moduls (3) liegt.

4. Verfahren nach einem der Ansprüche 1 bis 3, **dadurch gekennzeichnet, dass** es zwischen den Schritten d) und e) Unterschritte umfasst zur:
- Prüfung der Position des Flecks (41) auf dem Ziel (40), und
- Einstellung der Position des ersten Moduls (3) derart, dass der Fleck in der Mitte des Ziels liegt.

5. Verfahren nach einem der Ansprüche 1 bis 4, **dadurch gekennzeichnet, dass** die Tragmittel (11) dazu konfiguriert sind, eine Positionierungseinstellung des ersten Moduls (3) in mindestens eine Richtung (f1), die im Wesentlichen zu der Längsachse (X) des ersten Moduls senkrecht ist, zu gestatten.

6. Verfahren nach einem der Ansprüche 1 bis 5, **dadurch gekennzeichnet, dass** die Tragmittel (11) dazu konfiguriert sind, eine Positionierungseinstellung des ersten Moduls (3) in zwei Richtungen (f1, f2), die im Wesentlichen zueinander und zu der Längsachse (X) des ersten Moduls senkrecht sind, zu gestatten.

7. Verfahren nach einem der Ansprüche 1 bis 6, **dadurch gekennzeichnet, dass** die Aufhängungs- und Verlagerungsmittel mindestens einen Flaschenzug (21) umfassen, der an einem Balken (20) angehängt und dazu geeignet ist, entlang dieses Balkens, der die Verlagerungsachse (Z) definiert, verlagert zu werden.

8. Verfahren nach einem der Ansprüche 1 bis 7, **dadurch gekennzeichnet, dass** das erste Modul (3) ein Modul ist, das die Aufnahme (6) umfasst.

9. Verfahren nach Anspruch 8, **dadurch gekennzeichnet, dass** der Sender (30) in der Aufnahme (6) des ersten Moduls (3) aufgenommen ist.

## Claims

1. Method for assembling a turbomachine (1), by means of a device (10), the turbomachine comprising at least two modules (3, 4) assembled by insertion of a shaft (5) of one of the modules into a housing (6) of the other module, the device comprising:
- support means (11) of a first of the modules,
- suspension and movement means (20, 21) of a second of the modules along a movement axis (Z),
- a laser beam emitter (30) intended to be fixed to said first module and configured to emit a laser beam (31) that coincides with a longitudinal axis (X) of this first module, and
- a target (40) intended to be fixed to said suspension and movement means, such that it can be moved along said movement axis, and such that in at least two separate axial positions (P1, P2) on this axis, a task (41) from said laser beam is located at the centre of said target,
the method being **characterised in that** it comprises the steps of:
a) positioning said first module (3) on said support means (11),
b) fixing said target (40) to said suspension and movement means,
c) determining a first axial position (P1) of said target, for which a task (41) of said laser beam (31) is located at the centre of said target,
d) moving said target along said movement axis (Z), and
e) determining a second axial position (P2) of said target, for which a task of said laser beam is located at the centre of said target, in order to validate the parallelism between said longitudinal axis (X) of said first module and said movement axis.

2. Method according to claim 1, **characterised in that** it comprises the following steps of:
f) disassembling said target (40) from said suspension and movement means,
g) fixing said second module (4) to said suspension and movement means, and
h) inserting said first and second modules (3, 4) into one another, by moving said second module along said movement axis.

3. Method according to claim 1 or 2, **characterised in that** said first axial position (P1) is located in the vicinity of the first module (3).

4. Method according to one of claims 1 to 3, **characterised in that** it comprises, between steps d) and e), the sub-steps of:
- verifying the position of said task (41) on said target (40), and
- adjusting the position of the first module (3) such that said task is located at the centre of said target.

5. Method according to one of claims 1 to 4, **characterised in that** said support means (11) are configured to enable the adjustment of the positioning of said first module (3) in at least one direction (f1) substantially perpendicular to said longitudinal axis (X) of said first module.

6. Method according to one of claims 1 to 5, **characterised in that** said support means (11) are configured to enable the adjustment of the positioning of said first module (3) in two directions (f1, f2) substantially perpendicular to one another and to said longitudinal axis (X) of said first module.

7. Method according to one of claims 1 to 6, **characterised in that** said suspension and movement means comprise at least one hoist (21) suspended from a girder (20) and able to be moved along the girder defining said movement axis (Z).

8. Method according to one of claims 1 to 7, **characterised in that** said first module (3) is the module comprising said housing (6).

9. Method according to claim 8, **characterised in that** said emitter (30) is housed in said housing (6) of said first module (3).
